# EUROPEAN PATENT SPECIFICATION

(11) **EP 2 520 352 B1**
(45) Date of publication and mention of the grant of the patent: **30.06.2021**
(21) Application number: 11164420.9
(22) Date of filing: 02.05.2011
(51) Int. Cl.: B01D 53/14, B01D 53/78

(54) **GAS/LIQUID CONTACTING VESSEL AND THE USE THEREOF IN A FLUE GAS TREATMENT SYSTEM**
GAS- BZW. FLÜSSIGKEITSKONTAKTBEHÄLTER UND VERWENDUNG DAVON IN EINEM RAUCHGASBEHANDLUNGSSYSTEM
RÉCIPIENT À CONTACT DE GAZ/LIQUIDE ET UTILISATION ASSOCIÉE AU SYSTÈME DE TRAITEMENT DE GAZ DE CARBURANT

(43) Date of publication of application: 07.11.2012
(73) Proprietor: General Electric Technology GmbH, 5400 Baden (CH)
(72) Inventor: Carroni, Richard, 5443 Niederrohrdorf (CH); Agostinelli, Gian-Luigi, 8048 Zürich (CH); Koss, Peter Ulrich, 8702 Zollikon (CH)
(74) Representative: Wesela-Bauman, Grzegorz

(56) References cited:
- EP-A2- 0 393 014
- WO-A1-98/32523
- JP-A- 61 245 820
- JP-A- 2006 025 914
- US-A- 3 432 995
- US-A- 6 138 378
- None

## Description

### Field of the invention

The proposed invention relates to a gas/liquid contacting vessel for treatment of a gas stream, and to a flue gas treatment system for removal of carbon dioxide (CO₂) from a flue gas using a liquid absorbent.

### Background

In the combustion of a fuel, such as coal, oil, peat, waste, etc., in a combustion plant, such as those associated with boiler systems for providing steam to a power plant, a hot process gas (or flue gas) is generated. Such a flue gas will often contain, among other things, carbon dioxide (CO₂). The negative environmental effects of releasing carbon dioxide to the atmosphere have been widely recognized, and have resulted in the development of processes adapted for removing carbon dioxide from the flue gas generated in the combustion of the above mentioned fuels.

Many of the developed flue gas cleaning processes involve contacting the flue gas with an absorbent liquid capable of absorbing CO₂ from the gas to produce a flue gas which is lean in CO₂ and an absorbent which is rich in CO₂. In processes used for industrial separation of CO₂, liquid solutions or slurries comprising amine compounds, e.g. monoethanolamine (MEA), or ammonia are commonly used as absorbents. A CO₂ absorber is employed to establish suitable conditions (temperature, pressure, turbulence, etc.) for chemical absorption of CO₂ into the absorbent from a mixed gas stream. The "rich" absorbent containing absorbed CO₂ is subsequently regenerated, whereby absorbed CO₂ is separated from the absorbent, and the regenerated "lean" absorbent is then reused in the CO₂ absorption process. Thus, a circulating absorbent stream is formed. Regeneration is generally achieved by heating the absorbent in a reboiler to a temperature at which CO₂ is released from the absorbent.

Another type of flue gas treatment process, is the chilled ammonia process. The chilled ammonia based systems and processes (CAP) provide a relatively low cost means for capturing and removing CO₂ from a gas stream, such as, for example, a post combustion flue gas stream. An example of such a system and process has previously been disclosed in the published international patent application WO 2006/022885 titled "Ultra Cleaning of Combustion Gas Including the Removal of CO₂". The general principle of the chilled ammonia process resembles that of the amine based process described above. The tem "chilled" refers to the operating temperature of the absorber vessel in the chilled ammonia process, which is generally in the range of 0-20 °C, and preferably in the range of 0-10 °C. In the process described in WO 2006/022885, the absorption of CO₂ from a flue gas stream is achieved by contacting a chilled ammonia ionic solution or slurry in an absorber with a flue gas stream containing CO₂. The ionic solution containing absorbed CO₂ is subsequently regenerated by heating under increased pressure, whereby CO₂ is removed from the ionic solution, and the regenerated ionic solution can be reused in the CO₂ absorption process.

The absorbers and regenerators in both of the above described techniques rely on solvent contacting flue gas or steam, in order to capture and release CO₂, respectively. In order for the necessary mass transfer to occur efficiently, the packing in the columns must be adequately wetted, so as to prevent breakthrough of flue gas or steam. The design of these columns draws upon experience in the chemical industry, whereby the majority of operation occurs at or near the "design point".

Many industrial combustion processes, however, operate at varying loads, resulting in varying flue gas flow rates. One example is the combined cycle power plant (CCPP). One of the large advantages of CCPP is the operational flexibility, in which the entire load range can be covered within short periods of time. For this reason, CCPP are viewed as a means of complementing the highly variable power output from more unpredictable renewable sources (e.g. wind, solar). The flue gas flow rate is a strong function of the gas turbine load, with the value almost halving between 100% and 50% gas turbine load. When implementing a CO₂ absorption system in a CCPP, the varying flue gas flow rate is problematic because the absorber and regenerator columns in the absorption system are rarely operated near their design point, thereby resulting in both technical and financial inefficiency. In particular, at low loads, the fluid flow rate may be too small to uniformly wet the packing, thereby permitting breakthrough of the flue gas.

One approach to overcome this problem is by using multiple trains (consisting of several smaller units), but this is an expensive solution that could be difficult to control. Such a solution is proposed in EP 393 014.

WO 98/32523 discloses a flue gas scrubber intended for scrubbing flue gases from an energy production unit. The flue gas scrubber comprises a scrubber housing forming in its interior a scrubber chamber, into which a flue gas inlet and equipment for supplying washing solution are brought. The scrubber chamber is divided with a partition wall into two or more scrubber sections each with its own flue gas duct and its own devices for supplying washing solution. According to the teaching of WO 98/32523 the gas inlets as well as the liquid system of both scrubber sections are completely independent from each other and are not connectable between both scrubber sections. Both sections discharge into a common exhaust duct.

US 6,138,378 relates to a wet gas process which would not require a spray pump, and which would allow the absorption liquid to be recovered smoothly even if the flow velocity of the gases entrained to the liquid should decrease. A wet gas processing apparatus in which the absorption liquid collected in the first liquid storage tank is sprayed in a specified direction by a discharge unit consisting of spray nozzles in the absorption tower. The sprayed liquid is brought into contact with the exhaust gases which are conducted into the tower, and the targeted components of the gases are absorbed and removed. This processing apparatus is distinguished by the following. The first liquid storage tank for the absorption liquid comprises a pressure tank which generates a pressurized gas in the space above the surface of the collected liquid. The increased pressure of the pressurized gas is employed to spray the liquid collected in the pressurized tank from the spray nozzle unit in the absorption tower. This apparatus is further distinguished as the following. This invention has overflow ports which generate a virtually horizontal overflow or source flow. The absorption liquid propelled by the overflow ports makes orthogonal contact with the flow of exhaust gases, which results in both atomization of the liquid and liquid-vapor contact.

### Summary of the invention

It is an object of the present invention to alleviate at least one of the above mentioned problems. The present invention relates to the subject matter as set forth in the claims.

According to aspects illustrated herein, there is provided a gas/liquid contacting vessel for treatment of a gas stream at varying mass flow rates, said vessel comprising
at least two distinct gas/liquid contacting compartments separated from each other by a substantially vertical partition, each compartment having a gas inlet and a liquid outlet near a bottom end thereof and a gas outlet and a liquid inlet near a top end thereof, and a mass transfer device arranged between said bottom end and top end,
wherein one of said compartments is operable for gas/liquid contacting independently of another of said compartments, by the features as set forth in claim 1.

In other words, it is proposed to utilize a single column that is split into two or more substantially vertical compartments, to which the incoming fluids and gases can be distributed according to the mass flow rate of the flue gas. This allows for the ratio of flow rate to residence time (liquid-to-gas ratio) to be maintained closer to a predetermined value than possible with conventional single compartment vessels. This means the operation can be conducted closer to the design point and that CO₂ capture efficiency can be kept high across a larger load range. Furthermore, the liquid absorbent flow rate can be optimized, resulting in lower liquid absorbent consumption. Also, in systems utilizing regeneration of the liquid absorbent by heating, this in turn leads to reduced regenerator steam consumption when operating the system at partial load.

A gas/liquid contacting vessel, such as an absorber vessel, generally comprises a substantially cylindrical container, wherein at least a portion of the inner volume of the container is filled with a mass transfer device operative for facilitating contact between a gas and a liquid. The gas/liquid contacting vessel is commonly arranged in a substantially vertical orientation and configured to receive a liquid through a liquid inlet near the top of the vessel and a gas through a gas inlet near the bottom of the vessel. During operation of the vessel, a gas fed through the gas inlet and a liquid fed through the liquid inlet are brought into contact with each other in the mass transfer device.

The bottom end generally refers to a section of the vessel below a mass transfer device, whereas the top end generally refers to a section of the vessel above a mass transfer device. The gas inlet and liquid outlet may generally be positioned below the mass transfer device, and the gas outlet and liquid inlet may generally be positioned above the mass transfer device. The gas inlet may be positioned between the liquid outlet and the mass transfer device.

According to some embodiments, the mass transfer devices comprise packed beds.

According to some embodiments, the gas/liquid contacting vessel defines an inner volume having a circular horizontal cross-section, and the at least two distinct gas/liquid contacting compartments are defined by an inside wall of the vessel and one or more substantially vertical walls extending throughout a substantially vertical cross-section of the inner volume of the vessel.

According to other embodiments, the gas/liquid contacting vessel defines an inner volume having a circular horizontal cross-section, and at least one of the distinct gas/liquid contacting compartments is defined by a tubular wall extending substantially vertically throughout the inner volume of the vessel.

According to some embodiments, the gas/liquid contacting vessel has two gas/liquid contacting compartments. For practical reasons, two gas/liquid contacting compartments are often sufficient for achieving a substantially improved efficiency of the vessel during large variations in the mass flow rate of the flue gas. Two gas/liquid contacting compartments also involve a minimum of adaption of present vessel designs for implementation. An additional advantage is the potential use of the vessel in a combustion plant utilizing, or prepared for, flue gas recirculation (FGR). In combustion plants utilizing FGR, often about 50 percent of the flue gas produced is recirculated back to the combustion process, resulting in an about 50 percent decrease in the mass flow rate of the flue gas to the flue gas treatment system. Thus, a gas/liquid contacting vessel having two gas/liquid contacting compartments may easily be adapted for operation with flue gas recirculation.

According to other aspects illustrated herein, there is provided a flue gas treatment system for removal of carbon dioxide (CO₂) from a flue gas using a liquid absorbent, comprising
a CO₂ absorber vessel and
an absorbent regenerator vessel,
wherein the CO₂ absorber vessel comprises a gas/liquid contacting vessel for treatment of a gas stream at varying mass flow rates as outlined above.

According to some embodiments of the flue gas treatment system, each of said CO₂ absorber vessel and said absorbent regenerator vessel comprise a gas/liquid contacting vessel as defined above.

According to some embodiments, said CO₂ absorber vessel and said absorbent regenerator vessel each comprises two gas/liquid contacting compartments.

According to some embodiments, the flue gas treatment system is selected from the group consisting of an amine based gas treatment system and an ammonia based gas treatment system, such as a chilled ammonia based gas treatment system.

According to other aspects illustrated herein, there is provided a combined cycle power plant comprising a gas/liquid contacting vessel or a flue gas treatment system according to the aspects described above.

According to other aspects illustrated herein, there is provided the use of a gas/liquid contacting vessel or a flue gas treatment system according to the aspects described above for removal of CO₂ from a flue gas stream.

According to other aspects illustrated herein, there is provided a method as set forth in the independent method claim.

According to some embodiments, the gas/liquid contacting vessel is a CO₂ absorber vessel of a flue gas treatment system according to the aspects described above.

According to some embodiments, the flue gas stream to be treated in the method is produced in a combustion plant utilizing, or prepared for, flue gas recirculation.

The above described and other features are exemplified by the following figures and detailed description. Further objects and features of the present invention will be apparent from the description and the claims.

### Brief description of the Drawings

Referring now to the figures, which are exemplary embodiments, and wherein the like elements are numbered alike:
FIG. 1 is a diagram schematically depicting a gas/liquid contacting vessel, e.g. an absorber vessel, having two distinct gas/liquid contacting compartments.
FIG. 2 is a diagram schematically depicting a gas/liquid contacting vessel, e.g. a regenerator vessel, having two distinct gas/liquid contacting compartments.
FIG. 3a-3e are schematic horizontal cross section views of gas/liquid contacting vessels having different substantially vertical partition configurations.
FIG. 4 is a diagram schematically depicting an amine based carbon dioxide (CO₂) capture system wherein the CO₂ absorber vessel and liquid absorbent regenerator vessel both comprises two distinct gas/liquid contacting compartments.

### Detailed description of preferred embodiments

Herein, the inventive concept as applied to the absorber and/or regenerator vessels of an amine absorption based CO₂ capture system will be described in detail with reference to the drawings. It is realized that the inventive concept may also be applied to other gas/liquid contacting components of a flue gas treatment system, for example water wash units for removal of trace contaminants, strippers and direct contact coolers/heaters.

The term "gas", as used herein, is intended to encompass gases as well as liquids in vapor form. Specifically, the gas processed in the gas/liquid contacting vessels described herein may be a gas, such as CO₂, or a liquid, for example water, in vapor form.

The term "in fluid contact with" with regard to two components of a system, one component being upstream of the other, then during the normal operation of the system, essentially all of the fluid passing through the system passes first through the upstream component and then through the other component. The terms "fluid contact" and "fluid communication" as used herein are synonymous.

The term "configured to receive", as used herein, means that the system may comprise piping, tubing, fittings and/or other similar means for fluid transport, as well as suitable pumps or other similar liquid displacement devices, such that a fluid may be transported from one position to another.

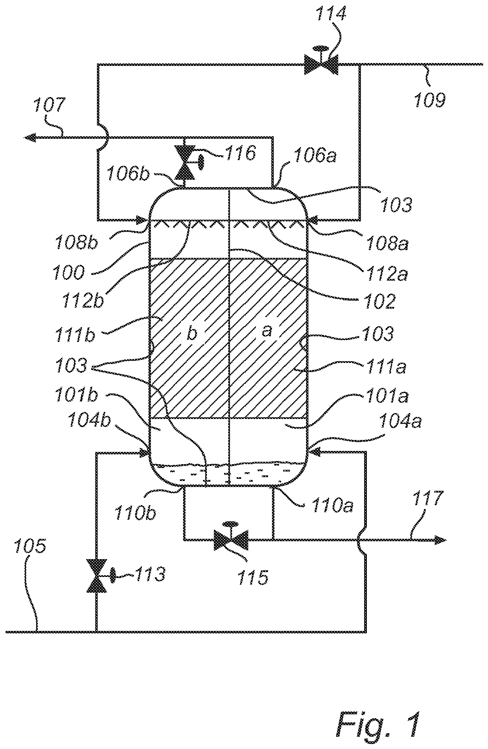

FIG. 1 schematically depicts a gas/liquid contacting vessel 100, e.g. an absorber vessel, having two distinct gas/liquid contacting compartments 101a, 101b separated from each other by a substantially vertical partition 102.

The gas/liquid contacting vessel 100 comprises a substantially vertically oriented substantially cylindrical container, defining an inner volume having a circular horizontal cross-section. The inner volume of the gas/liquid contacting vessel 100 is divided into two distinct gas/liquid contacting compartments 101a, 101b by an inside wall 103 of the vessel, i.e. an inner surface of an exterior wall of the vessel, and one or more substantially vertical walls 102 extending throughout a substantially vertical cross-section of the inner volume of the vessel. The gas/liquid contacting vessel 100 and substantially vertical partition(s) can be of any suitable construction material, e.g. stainless steel, as will be recognized by a person skilled in the art. The partition(s) may be attached to the inside walls, e.g. by welding or other suitable techniques, such that the partition(s) together with the inside walls of the vessel define the distinct gas/liquid contacting compartments.

The gas/liquid contacting compartments 101a, 101b are distinct, meaning that gas and or liquid in one compartment may be prevented from entering the other compartment. This allows one of the two compartments to be operable for gas/liquid contacting independently of the other compartment.

Each gas/liquid contacting compartment 101a, 101b has a gas inlet 104a, 104b arranged near a bottom end of the compartment, which is configured to receive a gas stream from a gas duct 105, and a gas outlet 106a, 106b arranged near a top end of the compartment configured to discharge the gas stream from the compartment via a gas duct 107. Each gas/liquid contacting compartment 101a, 101b further has a liquid inlet 108a, 108b arranged near a top end of the compartment, which is configured to receive a liquid absorbent from a liquid absorbent supply duct 109, and a liquid outlet 110a, 110b arranged near a bottom end of the compartment configured to discharge the liquid absorbent from the compartment to a liquid discharge duct 117.

Each gas/liquid contacting compartment 101a, 101b further comprises a mass transfer device 111a , 111b operative for facilitating contact between a gas and a liquid, arranged between said gas inlet 104a, 104b and said liquid inlet 108a, 108b.

The mass transfer device 111a , 111b is configured to provide efficient contact between a gas stream and an liquid stream fed through the respective gas and liquid inlets of the compartment. The mass transfer device may, e.g., comprise one or more commonly known structured or random packing materials, or a combination thereof, provided in the form of an absorption column, such as a packed bed column. The mass transfer device may preferably be arranged to operate in countercurrent flow mode. As an example, the mass transfer device may comprise an absorption column arranged to operate in countercurrent flow mode, wherein the gas stream is fed near a bottom end of the compartment, below the mass transfer device, and a liquid absorbent is fed near a top end of the compartment, above the mass transfer device, such that the gas stream is brought into contact with the liquid absorbent as it rises up through the column. The gas stream then leaves the column near the top of the compartment, while the liquid absorbent leaves the column near the bottom of the compartment.

Each gas/liquid contacting compartment 101a, 101b may also be provided with a liquid distribution device 112a,112b , e.g. comprising an array of spray heads, in liquid connection with the liquid inlet 108a, 108b and operative for distributing a liquid fed via the liquid inlet evenly onto the mass transfer device 111a , 111b.

The gas/liquid contacting compartments 101a, 101b described with reference to FIG. 1 comprise a single mass transfer device. According to alternative embodiments, each gas/liquid contacting compartments may also comprise two or more mass transfer devices arranged in series, such that a gas stream fed through the gas inlet first passes through a first mass transfer device and then passes through a second mass transfer device, etc., before being discharged via the gas outlet. In such embodiments, each gas/liquid contacting compartment may also comprise two or more liquid inlets and, optionally, two or more liquid distribution devices, wherein a first liquid inlet is arranged above the topmost mass transfer device, and a second liquid inlet is arranged between two mass transfer devices. In such embodiments, the gas may be contacted with a first liquid in a first mass transfer device and contacted with a second liquid in a second mass transfer device, etc.

In order to enable independent operation of one or more of the gas/liquid contacting compartments 101a, 101b, the vessel comprises shut-off means, whereby gas and/or liquid flow to one of the a gas/liquid contacting compartments can be blocked independently of the other of said compartments.

Referring to the embodiment of FIG. 1, the gas/liquid contacting vessel 100 comprises a system of fluid valves that enables the liquid and/or gas supply to one of the gas/liquid contacting compartments to be opened or closed. The system comprises inlet valves 113, 114 and optionally also outlet valves 115, 116. When both inlet valves 113, 114 are closed, the entire gas stream coming from the gas duct 105 is directed to the gas inlet 104a of gas/liquid contacting compartment 101a, and the entire liquid stream coming from liquid absorbent supply duct 109 is directed to the liquid inlet 108a of gas/liquid contacting compartment 101a. When both inlet valves 113, 114 are open, the gas stream and the liquid stream are instead distributed, e.g. equally, between the two gas/liquid contacting compartments 101a and 101b. Optional outlet valves 115, 116 prevent gas leaving gas/liquid contacting compartment 101a from entering gas/liquid contacting compartment 101b via gas outlet 106b, and/or prevent liquid leaving gas/liquid contacting compartment 101a from entering gas/liquid contacting compartment 101b via liquid outlet 110b.

The shut-off means, e.g. fluid valves, may be arranged on the gas and/or liquid supply ducts 105, 109 as indicated in FIG. 1. Alternatively, the shut-off means may be arranged directly at the gas and/or liquid inlets 104a, 104b, 106a, 106b or inside the gas/liquid contacting vessel 100 at a partition 102 separating the gas/liquid contacting compartments. For example a valve or damper may be arranged at the partition 102 separating a first and a second gas/liquid contacting compartment, below the mass transfer device, such that said valve or damper, when opened, allows a gas stream fed to the first compartment to be distributed between the first and the second compartment.

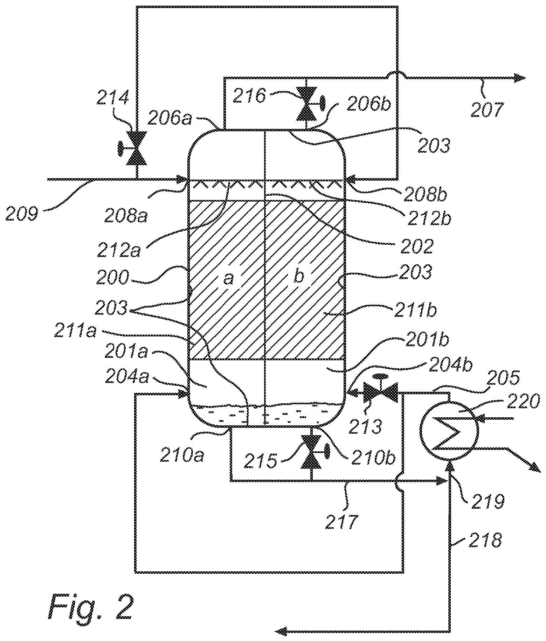

FIG. 2 schematically depicts a regenerator vessel 200, which may for example be employed in an amine based CO₂ absorption system, said regenerator vessel having two distinct gas/liquid contacting compartments 201a and 201b separated from each other by a substantially vertical partition 202. The regenerator vessel 200 of FIG. 2 is similar to the gas/liquid contacting vessel 100 of FIG. 1, but further comprises a reboiler 220 operative for heating liquid absorbent, collected from the bottom of the two distinct gas/liquid contacting compartments, to generate steam. The steam produced in the reboiler 220 may be fed back through gas inlets 204a, 204b to the gas/liquid contacting compartments 201a, 201b. In the gas/liquid contacting compartments 201a, 201b, the steam is contacted with CO₂ rich liquid absorbent in the mass transfer devices 211a, 211b.

The regenerator vessel 200 comprises a substantially vertically oriented substantially cylindrical container, defining an inner volume having a circular horizontal cross-section. The inner volume of the gas/liquid contacting vessel 200 is divided into two distinct gas/liquid contacting compartments 201a and 201b by an inside wall 203 of the vessel, i.e. an inner surface of an exterior wall of the vessel, and one or more substantially vertical walls 202 extending throughout a substantially vertical cross-section of the inner volume of the vessel. The gas/liquid contacting vessel 200 and substantially vertical partition(s) can be of any suitable construction material, e.g. stainless steel, as will be recognized by a person skilled in the art. The partition(s) may be attached to the inside walls, e.g. by welding or other suitable techniques, such that the partition(s) together with the inside walls of the vessel define the distinct gas/liquid contacting compartments. The regenerator vessel and gas/liquid contacting compartments may optionally be designed for operation at increased pressure, such as pressures in the range of 1 to 50 bar gauge or in the range of 10 to 30 bar gauge.

The gas/liquid contacting compartments 201a, 201b are distinct, meaning that gas and or liquid in one compartment may be prevented from entering the other compartment. This allows one of the compartments 201a or 201b to be operable for gas/liquid contacting independently of the other compartment.

Each gas/liquid contacting compartment 201a, 201b has a gas inlet 204a, 204b arranged near a bottom end of the compartment, which is configured to receive a gas stream (i.e. steam) from the reboiler 220, and a gas outlet 206a, 206b arranged near a top end of the compartment configured to discharge released CO₂ and residual water vapor from the compartment. Each gas/liquid contacting compartment further has a liquid inlet 208a, 208b arranged near a top end of the compartment, which is configured to receive a CO₂ rich liquid absorbent from the absorber vessel via a liquid absorbent supply duct 209, and a liquid outlet 210a, 210b arranged near a bottom end of the compartment configured to discharge the CO₂ lean liquid absorbent from the compartment to a liquid discharge duct 217. One portion of the discharged CO₂ lean liquid absorbent may be returned to the absorber vessel via liquid duct 218 for absorbing more CO₂, while another portion is directed via liquid duct 219 to the reboiler 220 for production of steam for the regeneration process.

Each gas/liquid contacting compartment 201a, 201b further comprises a mass transfer device 211a, 211b, arranged between said gas inlet 204a, 204b and said liquid inlet 208a, 208b, and operative for facilitating contact between the steam produced by the reboiler 220 and the CO₂ rich liquid absorbent.

The mass transfer device 211a , 211b may, e.g., comprise one or more commonly known structured or random packing materials, or a combination thereof, provided in the form of an absorption column, such as a packed bed column. The mass transfer device may preferably be arranged to operate in countercurrent flow mode. As an example, the mass transfer device may comprise an absorption column arranged to operate in countercurrent flow mode, wherein the steam from the reboiler is fed near a bottom end of the compartment, below the mass transfer device, and the CO₂ rich liquid absorbent is fed near a top end of the compartment, above the mass transfer device, such that the steam is brought into contact with the liquid absorbent as it rises up through the column.

Each gas/liquid contacting compartment 201a, 201b may also be provided with a liquid distribution device 212a, 212b, e.g. comprising an array of spray heads, in liquid connection with the liquid inlet 208a, 208b and operative for distributing a liquid fed via the liquid inlet evenly onto the mass transfer device 211a, 211b.

In order to enable independent operation of one or more of the gas/liquid contacting compartments 201a, 201b, the vessel comprises shut-off means, whereby gas and/or liquid flow to one of the a gas/liquid contacting compartments can be blocked independently of the other of said compartments.

Referring to the embodiment of FIG. 2, the gas/liquid contacting vessel 200 comprises a system of fluid valves that enables the liquid and/or gas supply to one of the gas/liquid contacting compartments to be opened or closed. The system comprises inlet valves 213, 214 and optionally also outlet valves 215, 216. When both inlet valves 213, 214 are closed, the entire gas stream coming from the gas duct 205 is directed to the gas inlet 204a of gas/liquid contacting compartment 201a, and the entire liquid stream coming from liquid absorbent supply duct 209 is directed to the liquid inlet 208a of gas/liquid contacting compartment 201a. When both inlet valves 213, 214 are open, the gas stream and the liquid stream are instead distributed, e.g. equally, between the two gas/liquid contacting compartments 201a and 201b. Optional outlet valves 215, 216 prevent gas leaving gas/liquid contacting compartment 201a from entering gas/liquid contacting compartment 201b via gas outlet 206b, and/or prevent liquid leaving gas/liquid contacting compartment 201a from entering gas/liquid contacting compartment 201b via liquid outlet 210b.

The shut-off means, e.g. fluid valves, may be arranged on the gas and/or liquid supply ducts 205, 209 as indicated in FIG. 2. Alternatively, the shut-off means may be arranged directly at the gas and/or liquid inlets 204a, 204b, 206a, 206b or inside the gas/liquid contacting vessel 200 at a partition 202 separating the gas/liquid contacting compartments. For example a valve or damper may be arranged at the partition 202 separating a first and a second gas/liquid contacting compartment, below the mass transfer device, such that said valve or damper, when opened, allows a gas stream fed to the first compartment to be distributed between the first and the second compartment.

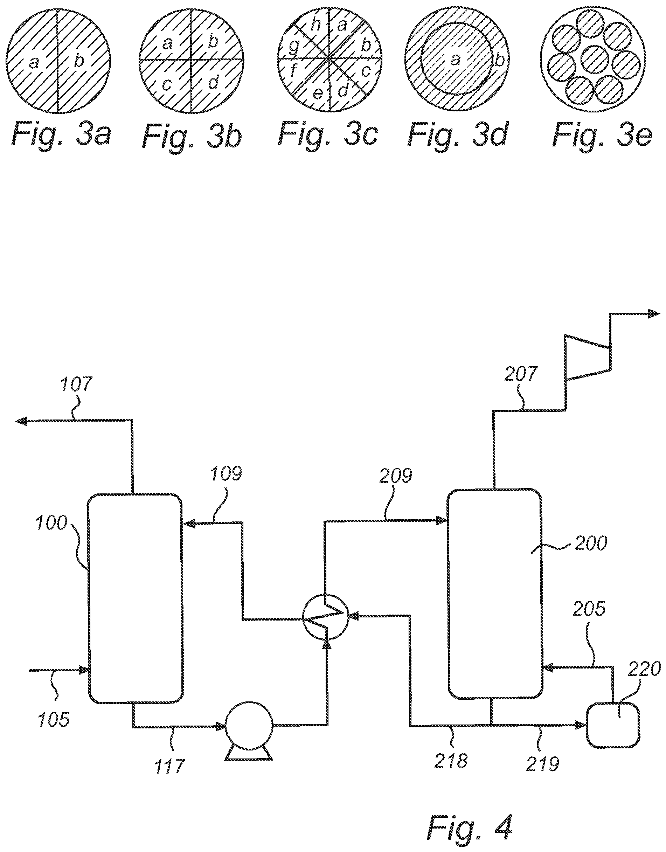

FIG. 3 schematically depicts horizontal cross section views of gas/liquid contacting vessels, such as the gas/liquid contacting vessel 100 described above with reference to FIG. 1 or the regenerator vessel 200 described above with reference to FIG. 2, having different substantially vertical partition configurations. The various partition configurations could be employed within a gas/liquid contacting vessel comprising a substantially vertically oriented substantially cylindrical container.

FIG. 3a represents a gas/liquid contacting vessel having two gas/liquid contacting compartments, a and b , each defined by an inside wall of the vessel and a substantially vertical wall extending throughout a substantially vertical cross-section plane of the inner volume of the vessel. The two compartments a and b may preferably be volumetrically equal, but can also be volumetrically different.

FIG. 3b represents a gas/liquid contacting vessel having four gas/liquid contacting compartments, a-d, each defined by an inside wall of the vessel and a two substantially vertical walls extending throughout two different substantially vertical cross-section planes of the inner volume of the vessel. The four compartments a-d may preferably be volumetrically equal, but can also be volumetrically different.

FIG. 3c represents a gas/liquid contacting vessel having eight gas/liquid contacting compartments, a-h, each defined by an inside wall of the vessel and a two substantially vertical walls extending throughout two different substantially vertical cross-section planes of the inner volume of the vessel. The eight compartments a-h may preferably be volumetrically equal, but can also be volumetrically different.

FIG. 3d represents a gas/liquid contacting vessel having a first gas/liquid contacting compartment, a, defined by a tubular wall extending substantially vertically throughout the inner volume of the vessel and a second gas/liquid contacting compartment, b, defined by an outside surface of the first gas/liquid contacting compartment and an inside wall of the vessel.

FIG. 3e represents a gas/liquid contacting vessel having a plurality of distinct gas/liquid contacting compartments, each defined by a tubular wall extending substantially vertically throughout the inner volume of the vessel.

A gas/liquid contacting vessel as described above with reference to FIG. 1, and a regenerator vessel as described above with reference to FIG. 2, comprising at least two distinct gas/liquid contacting compartments, may for example be employed in an absorption based flue gas treatment system for removal of carbon dioxide (CO₂) from a flue gas, e.g. produced by a combustion plant. Examples of flue gas treatment systems where the present gas/liquid contacting vessels would be useful include amine absorption systems and ammonia based CO₂ absorption systems, such as chilled ammonia systems. Herein below, the concept will be illustrated with reference to an ammonia based CO₂ absorption system.

The amine based CO₂ absorption process is based on the chemistry of the amine-CO₂-H₂O system and the ability of the amine solution to absorb CO₂ at low temperature (approx. 45 °C) and to release the CO₂ at moderately elevated temperature (approx. 125 °C). Examples of amine compounds commonly used in absorption of CO₂ include, but are not limited to, monoethanolamine (MEA), diethanolamine (DEA) and methyldiethanolamine (MDEA). CO₂ and water produce carbonic acid which reacts with the amine solution in the absorption column, forming chemical compounds (carbonates) and resulting in the removal of CO₂ from the gaseous stream. At higher temperatures, the reaction is reversed to release CO₂ in a concentrated form.

FIG. 4 is a schematic representation of an amine based carbon dioxide (CO₂) capture system. According to one embodiment, the system comprises an absorber vessel 100 comprising a gas/liquid contacting vessel as described herein above with reference to FIG. 1. Optionally, the system further comprises a regenerator vessel 200 as described herein above with reference to FIG. 2.

When each of the absorber vessel 100 and the regenerator vessel 200 of an absorption based carbon dioxide (CO₂) capture system comprise gas/liquid contacting vessels having at least two distinct gas/liquid contacting compartments, the absorber vessel and the regenerator vessel may preferably have the same number of gas/liquid contacting compartments.

When one or each of the absorber vessel and the regenerator vessel of the absorption based carbon dioxide (CO₂) capture system comprise gas/liquid contacting vessels having at least two distinct gas/liquid contacting compartments, the capacity of the flue gas treatment system can be adjusted according to the mass flow rate of the incoming flue gas to be treated. This allows for the ratio of flow rate to residence time (liquid-to-gas ratio) to be maintained closer to a predetermined value than possible with conventional single compartment vessels. This means the operation can be conducted closer to the design point and that CO₂ capture efficiency can be kept high across a larger load range. Furthermore, the liquid absorbent flow rate can be optimized, which in turn leads to reduced regenerator steam consumption when operating the system at partial load.

While the invention has been described with reference to a number of preferred embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed as the best mode contemplated for carrying out this invention, but that the invention will include all embodiments falling within the scope of the appended claims. Moreover, the use of the terms first, second, etc. do not denote any order or importance, but rather the terms first, second, etc. are used to distinguish one element from another.

## Claims

1. A gas/liquid contacting vessel (100) for treatment of a gas stream at varying mass flow rates, said vessel comprising
at least two distinct gas/liquid contacting compartments (101a, 101b) separated from each other by a substantially vertical partition (102), each compartment having a gas inlet (104a, 104b) and a liquid outlet (110a, 110b) near a bottom end thereof and a gas outlet (106a, 106b) and a liquid inlet (108a, 108b) near a top end thereof, and a mass transfer device (111a, 111b) arranged between said bottom end and top end,
wherein all gas outlets (106a, 106b) are connected to a common gas duct (107), **characterized in that**
all liquid outlets (110a, 110b) are connected to a common liquid discharge duct (117),
all gas inlets (104a, 104b) are connected to a common gas duct (105), and
all liquid inlets (108a, 108b) are connected to a common liquid absorbent supply duct (109),
and further **in that** inlet valves (113, 114) and outlet valves (115, 116) are arranged as shut-off means so as to selectively block and open fluid connection between a compartment and the common gas duct (107), the common liquid discharge duct (117), the common gas duct (105), the common liquid absorbent supply duct (109) and the other compartments,
so that one of said compartments is operable for gas/liquid contacting independently of another of said compartments.

2. A gas/liquid contacting vessel (100) according to any one of the preceding claims, wherein the mass transfer devices (111a, 111b) comprise packed beds.

3. A gas/liquid contacting vessel according to any one of the preceding claims, wherein the vessel (100) defines an inner volume having a circular horizontal cross-section, and wherein the at least two distinct gas/liquid contacting compartments (101a, 101b) are defined by an inside wall (103) of the vessel and one or more substantially vertical walls (102) extending throughout a substantially vertical cross-section of the inner volume of the vessel.

4. A gas/liquid contacting vessel according to any one of the preceding claims, wherein the vessel (100) defines an inner volume having a circular horizontal cross-section, and wherein at least one of the distinct gas/liquid contacting compartments is defined by a tubular wall extending substantially vertically throughout the inner volume of the vessel.

5. A gas/liquid contacting vessel according to any one of the preceding claims, which has only two gas/liquid contacting compartments.

6. A flue gas treatment system for removal of carbon dioxide (CO₂) from a flue gas using a liquid absorbent, comprising
a CO₂ absorber vessel (100) and
an absorbent regenerator vessel (200),
wherein said CO₂ absorber vessel comprises a gas/liquid contacting vessel as defined in any one of the preceding claims.

7. A flue gas treatment system according to the preceding claim,
wherein each of said CO₂ absorber vessel (100) and said absorbent regenerator vessel (200) comprise a gas/liquid contacting vessel as defined in any one of claims 1 to 5.

8. A flue gas treatment system according to the preceding claim,
wherein said CO₂ absorber vessel (100) and said absorbent regenerator vessel (200) each comprises two gas/liquid contacting compartments (101a, 101b; 201a, 201b).

9. A flue gas treatment system according to any one of claims 6 to 8, which is selected from the group consisting of an amine based gas treatment system and an ammonia based gas treatment system.

10. A combined cycle power plant comprising a gas/liquid contacting vessel according to any one of claims 1 to 5 or a flue gas treatment system according to any one of claims 6 to 9.

11. Use of a gas/liquid contacting vessel according to any one of claims 1 to 5 or a flue gas treatment system according to any one of claims 6 to 9 for removal of CO₂ from a flue gas stream.

12. A method of operating a gas/liquid contacting vessel according to any one of claims 1 to 5, comprising
a) determining the mass flow rate of a flue gas stream to be treated,
b) opening or blocking fluid connection between one or more gas/liquid contacting compartment(s) of a gas/liquid contacting vessel and the common gas duct (107), the common liquid discharge duct (117), the common gas duct (105), the common liquid absorbent supply duct (109) and the other compartments to adjust the capacity of the gas/liquid contacting vessel to the mass flow rate of the flue gas stream determined in a), and
c) treating the flue gas stream by contacting it with a liquid absorbent in the open gas/liquid contacting compartment(s) of the gas/liquid contacting vessel.

13. The method of claim 15, wherein the gas/liquid contacting vessel is a CO₂ absorber vessel of a flue gas treatment system according to any one of claims 6 to 9.

14. The method of any one of claims 13 to 13, wherein the flue gas stream to be treated is produced in a combustion plant utilizing, or prepared for, flue gas recirculation.

## Patentansprüche

1. Gas-/Flüssigkeitskontaktbehälter (100) zur Behandlung eines Gasstroms mit variierenden Massendurchsätzen, wobei der Behälter umfasst:
mindestens zwei verschiedene Gas-/Flüssigkeitskontaktabteile (101a, 101b), die durch eine im Wesentlichen vertikale Trennwand (102) voneinander getrennt sind, wobei jedes Abteil einen Gaseinlass (104a, 104b) und einen Flüssigkeitsauslass (110a, 110b) nahe einem unteren Ende davon und einen Gasauslass (106a, 106b) und einen Flüssigkeitseinlass (108a, 108b) nahe einem oberen Ende davon aufweist, und eine Massenaustauschvorrichtung (111a, 111b), die zwischen dem unteren Ende und dem oberen Ende angeordnet ist,
wobei alle Gasauslässe (106a, 106b) mit einer gemeinsamen Gasleitung (107) verbunden sind, **dadurch gekennzeichnet, dass**
alle Flüssigkeitsauslässe (110a, 110b) mit einer gemeinsamen Flüssigkeitsablassleitung (117) verbunden sind,
alle Gaseinlässe (104 a, 104 b) mit einer gemeinsamen Gasleitung (105) verbunden sind, und
alle Flüssigkeitseinlässe (108a, 108b) mit einer gemeinsamen Flüssigkeitsabsorptionsmittelzufuhrleitung (109) verbunden sind,
und dass ferner Einlassventile (113, 114) und Auslassventile (115, 116) als Blockiermittel angeordnet sind, um die Fluidverbindung zwischen einem Abteil und der gemeinsamen Gasleitung (107), der gemeinsamen Flüssigkeitsablassleitung (117), der gemeinsamen Gasleitung (105), der gemeinsamen Flüssigkeitsabsorptionsmittelzufuhrleitung (109) und den anderen Abteilen selektiv zu sperren und zu öffnen,
sodass eines der Abteile für einen Gas-/Flüssigkeitskontakt unabhängig von einem anderen der Abteile betreibbar ist.

2. Gas-/Flüssigkeitskontaktbehälter (100) nach einem der vorstehenden Ansprüche, wobei die Massenaustauschvorrichtungen (111a, 111b) Festbetten umfassen.

3. Gas-/Flüssigkeitskontaktbehälter nach einem der vorstehenden Ansprüche, wobei der Behälter (100) ein Innenvolumen mit einem kreisförmigen horizontalen Querschnitt definiert und wobei die mindestens zwei verschiedenen Gas-/Flüssigkeitskontaktabteile (101a, 101b) durch eine Innenwand (103) des Behälters und eine oder mehrere im Wesentlichen vertikale Wände (102) definiert sind, die sich durch einen im Wesentlichen vertikalen Querschnitt des Innenvolumens des Behälters erstrecken.

4. Gas-/Flüssigkeitskontaktbehälter nach einem der vorstehenden Ansprüche, wobei der Behälter (100) ein Innenvolumen mit einem kreisförmigen horizontalen Querschnitt definiert und wobei mindestens eine der verschiedenen Gas-/Flüssigkeitskontaktabteile durch eine röhrenförmige Wand definiert ist, die sich im Wesentlichen vertikal durch das gesamte Innenvolumen des Behälters erstreckt.

5. Gas-/Flüssigkeitskontaktbehälter nach einem der vorstehenden Ansprüche, das nur zwei Gas-/Flüssigkeitskontaktabteile aufweist.

6. Rauchgasbehandlungssystem zur Entfernung von Kohlendioxid (CO₂) aus einem Rauchgas unter Verwendung eines flüssigen Absorptionsmittels, umfassend
einen CO₂-Absorberbehälter (100) und
einen Absorptionsmittelregeneratorbehälter (200),
wobei der CO₂-Absorberbehälter einen Gas-/Flüssigkeitskontaktbehälter nach einem der vorstehenden Ansprüche umfasst.

7. Rauchgasbehandlungssystem nach dem vorstehenden Anspruch, wobei sowohl der CO₂-Absorberbehälter (100) als auch der Absorptionsmittelregeneratorbehälter (200) einen Gas-/Flüssigkeitskontaktbehälter nach einem der Ansprüche 1 bis 5 umfassen.

8. Rauchgasbehandlungssystem nach dem vorstehenden Anspruch, wobei der CO₂-Absorberbehälter (100) und der Absorptionsmittelregeneratorbehälter (200) jeweils zwei Gas-/Flüssigkeitskontaktabteile (101a, 101b; 201a, 201b) umfassen.

9. Rauchgasbehandlungssystem nach einem der Ansprüche 6 bis 8, das aus der Gruppe ausgewählt ist, die aus einem Gasbehandlungssystem auf Aminbasis und einem Gasbehandlungssystem auf Ammoniakbasis besteht.

10. Kombikraftwerk, umfassend einen Gas-/Flüssigkeitskontaktbehälter nach einem der Ansprüche 1 bis 5 oder ein Rauchgasbehandlungssystem nach einem der Ansprüche 6 bis 9.

11. Verwendung eines Gas-/Flüssigkeitskontaktbehälters nach einem der Ansprüche 1 bis 5 oder eines Rauchgasbehandlungssystems nach einem der Ansprüche 6 bis 9 zur Entfernung von CO₂ aus einem Rauchgasstrom.

12. Verfahren zum Betreiben eines Gas-/Flüssigkeitskontaktbehälters nach einem der Ansprüche 1 bis 5, umfassend
a) Bestimmen der Massenstromrate eines zu behandelnden Rauchgasstroms,
b) Öffnen oder Sperren einer Fluidverbindung zwischen einem oder mehreren Gas-/Flüssigkeitskontaktabteilen eines Gas-/Flüssigkeitskontaktbehälters und der gemeinsamen Gasleitung (107), der gemeinsamen Flüssigkeitsablassleitung (117), der gemeinsamen Gasleitung (105), der gemeinsamen Flüssigkeitsabsorptionsmittelzufuhrleitung (109) und den anderen Abteilen, um die Kapazität des Gas-/Flüssigkeitskontaktbehälters an den in a) bestimmten Massendurchsatz des Rauchgasstroms anzupassen, und
c) Behandeln des Rauchgasstroms durch Kontaktaufnahme desselben mit einem flüssigen Absorptionsmittel in dem (den) offenen Gas-/Flüssigkeitsabteil(en) des Gas-/Flüssigkeitskontaktbehälters.

13. Verfahren nach Anspruch 15, wobei der Gas-/Flüssigkeitskontaktbehälter ein CO₂-Absorberbehälter eines Rauchgasbehandlungssystems nach einem der Ansprüche 6 bis 9 ist.

14. Verfahren nach einem der Ansprüche 13 bis 13, wobei der zu behandelnde Abgasstrom in einer Verbrennungsanlage erzeugt wird, die eine Rauchgasrückführung nutzt oder für diese vorbereitet ist.

## Revendications

1. Récipient de mise en contact gaz/liquide (100) pour le traitement d'un courant gazeux à des débits massiques variables, ledit récipient comprenant
au moins deux compartiments de mise en contact gaz/liquide distincts (101a, 101b) séparés les uns des autres par une séparation sensiblement verticale (102), chaque compartiment ayant une entrée de gaz (104a, 104b) et une sortie de liquide (110a, 110b) près d'une extrémité inférieure de celui-ci et une sortie de gaz (106a, 106b) et une entrée de liquide (108a, 108b) près d'une extrémité supérieure de celui-ci, et un dispositif de transfert de masse (111a, 111b) agencé entre lesdites extrémité inférieure et extrémité supérieure,
dans lequel toutes les sorties de gaz (106a, 106b) sont raccordées à un conduit de gaz commun (107), **caractérisé en ce que**
toutes les sorties de liquide (110a, 110b) sont raccordées à un conduit de décharge de liquide commun (117),
toutes les entrées de gaz (104a, 104b) sont raccordées à un conduit de gaz commun (105), et
toutes les entrées de liquide (108a, 108b) sont raccordées à un conduit d'alimentation d'absorbant liquide commun (109),
et en outre **en ce que** des vannes d'entrée (113, 114) et des vannes de sortie (115, 116) sont agencées en guise de moyen d'isolement de façon à bloquer et ouvrir sélectivement un raccordement fluidique entre un compartiment et le conduit de gaz commun (107), le conduit de décharge de liquide commun (117), le conduit de gaz commun (105), le conduit d'alimentation d'absorbant liquide commun (109) et les autres compartiments,
de sorte que l'un desdits compartiments est opérationnel pour une mise en contact gaz/liquide indépendamment d'un autre desdits compartiments.

2. Récipient de mise en contact gaz/liquide (100) selon l'une quelconque des revendications précédentes, dans lequel les dispositifs de transfert de masse (111a, 111b) comprennent des lits tassés.

3. Récipient de mise en contact gaz/liquide selon l'une quelconque des revendications précédentes, dans lequel le récipient (100) définit un volume interne ayant une coupe transversale horizontale circulaire, et dans lequel les au moins deux compartiments de mise en contact gaz/liquide distincts (101a, 101b) sont définis par une paroi intérieure (103) du récipient et une ou plusieurs parois sensiblement verticales (102) s'étendant sur l'ensemble d'une coupe transversale sensiblement verticale du volume interne du récipient.

4. Récipient de mise en contact gaz/liquide selon l'une quelconque des revendications précédentes, dans lequel le récipient (100) définit un volume interne ayant une coupe transversale horizontale circulaire, et dans lequel au moins l'un des compartiments de mise en contact gaz/liquide distincts est défini par une paroi tubulaire s'étendant de manière sensiblement verticale sur l'ensemble du volume interne du récipient.

5. Récipient de mise en contact gaz/liquide selon l'une quelconque des revendications précédentes, qui n'a que deux compartiments de mise en contact gaz/liquide.

6. Système de traitement de gaz de combustion pour l'élimination de dioxyde de carbone (CO₂) d'un gaz de combustion en utilisant un absorbant liquide, comprenant
un récipient absorbeur de CO₂ (100) et
un récipient régénérateur d'absorbant (200),
dans lequel ledit récipient absorbeur de CO₂ comprend un récipient de mise en contact gaz/liquide tel que défini dans l'une quelconque des revendications précédentes.

7. Système de traitement de gaz de combustion selon la revendication précédente, dans lequel chacun dudit récipient absorbeur de CO₂ (100) et dudit récipient régénérateur d'absorbant (200) comprend un récipient de mise en contact gaz/liquide tel que défini dans l'une quelconque des revendications 1 à 5.

8. Système de traitement de gaz de combustion selon la revendication précédente, dans lequel ledit récipient absorbeur de CO₂ (100) et ledit récipient régénérateur d'absorbant (200) comprennent chacun deux compartiments de mise en contact gaz/liquide (101a, 101b ; 201a, 201b).

9. Système de traitement de gaz de combustion selon l'une quelconque des revendications 6 à 8, qui est choisi dans le groupe constitué d'un système de traitement de gaz à base d'amine et d'un système de traitement de gaz à base d'ammoniac.

10. Centrale électrique à cycle combiné comprenant un récipient de mise en contact gaz/liquide selon l'une quelconque des revendications 1 à 5 ou un système de traitement de gaz de combustion selon l'une quelconque des revendications 6 à 9.

11. Utilisation d'un récipient de mise en contact gaz/liquide selon l'une quelconque des revendications 1 à 5 ou d'un système de traitement de gaz de combustion selon l'une quelconque des revendications 6 à 9 pour l'élimination de CO₂ d'un courant de gaz de combustion.

12. Procédé d'exploitation d'un récipient de mise en contact gaz/liquide selon l'une quelconque des revendications 1 à 5, comprenant
a) la détermination du débit massique d'un courant de gaz de combustion à traiter,
b) l'ouverture ou le blocage d'un raccordement fluidique entre un ou plusieurs compartiment(s) de mise en contact gaz/liquide d'un récipient de mise en contact gaz/liquide et le conduit de gaz commun (107), le conduit de décharge de liquide commun (117), le conduit de gaz commun (105), le conduit d'alimentation d'absorbant liquide commun (109) et les autres compartiments pour ajuster la capacité du récipient de mise en contact gaz/liquide au débit massique du courant de gaz de combustion déterminé en a), et
c) le traitement du courant de gaz de combustion par sa mise en contact avec un absorbant liquide dans le(s) compartiment(s) de mise en contact gaz/liquide ouvert(s) du récipient de mise en contact gaz/liquide.

13. Procédé selon la revendication 15, dans lequel le récipient de mise en contact gaz/liquide est un récipient absorbeur de CO₂ d'un système de traitement de gaz de combustion selon l'une quelconque des revendications 6 à 9.

14. Procédé selon l'une quelconque des revendications 13 à 13, dans lequel le courant de gaz de combustion à traiter est produit dans une installation de combustion utilisant, ou préparée pour, une recirculation de gaz de combustion.
